# FASCICULE DE BREVET EUROPEEN

(11) **EP 0 550 590 B1**
(45) Date de publication et mention de la délivrance du brevet: **03.05.1995**
(21) Numéro de dépôt: 91917385.6
(22) Date de dépôt: 26.09.1991
(51) Int. Cl.: B60R 25/00, B62D 53/08

(54) **DISPOSITIF DE SECURITE ANTIVOL POUR REMORQUES DE POIDS LOURDS**
DIEBSTAHLSICHERUNG FÜR AUFLIEGERANHÄNGER
ANTITHEFT SECURITY DEVICE FOR TRAILERS OF TRUCKS

(30) Priorité: 27.09.1990 FR 9012145; 10.05.1991 FR 9105977
(43) Date de publication de la demande: 14.07.1993
(73) Titulaire: SASSI, Léopold, F-13002 Marseille (FR); RIMBAUD, Paul, F-84120 Pertuis (FR); RIMBAUD, Pierre, F-13007 Marseille (FR); AGIUS, Joseph, F-13004 Marseille (FR)
(72) Inventeur: Sassi, Léopold, F 13002 Marseille (FR); Rimbaud, Paul, F 84120 Pertuis (FR); Rimbaud Pierre, F-13007 Marseille (FR); Agius, Joseph, F-13004 Marseille (FR); Vignapiano, Patrick, F-13005 Marseille (FR)
(74) Mandataire: Roman, Michel
(86) Numéro de dépôt international: FR9100749
(87) Numéro de publication internationale: WO9205981

(56) Documents cités:
- EP-A- 0 102 339
- DE-A- 2 155 873
- FR-A- 2 605 569
- GB-A- 1 565 542
- US-A- 4 730 468

## Description

La présente invention a pour objet un dispositif de sécurite antivol pour remorques de poids lourds.

Il concerne le domaine des transports routiers de tonnages importants effectués par des véhicules poids lourds articulés du type semi-remorque constitués d'un tracteur routier et d'une remorque pouvant être désolidarisés, et a pour objet d'empêcher le vol de cette dernière lorsqu'elle est immobilisée et non accouplée.

Les semi-remorques sont constitués d'un tracteur routier et d'une remorque équipés d'un système d'accouplement standardisé, ce qui permet à une remorque quelconque d'être accrochée à n'importe quel tracteur. Des chargements de toute nature sont transportés par ces véhicules, et il n'est pas rare qu'ils représentent une valeur importante, ce qui naturellement excite la convoitise des cambrioleurs.

Au cours de ces transports, il arrive couramment que les remorques avec leur chargement soient décrochées, par exemple lors de groupage ou dégroupages, et laissées en attente, pour permettre au tracteur d'être attelé à d'autres remorques dans le but de rentabiliser le matériel, qui est précisément conçu pour permettre ce type d'opérations. Dans ce but, l'avant de la remorque, qui est dépourvu de roues et repose durant le transport sur une plateforme du tracteur, est équipé de deux béquilles télescopiques manoeuvrées à l'aide d'une simple manivelle amovible.

Les béquilles utilisées actuellement sont presque toutes d'un modèle identique, chacune d'elle étant constitués de deux tubes de section carrée coulissant l'un dans l'autre, le tube inférieur portant une semelle articulée reposant sur le sol et étant actionné par une vis interne agissant sur un écrou solidaire de ce tube. La vis est entraînée, par l'intermédiaire d'un renvoi d'angle, grâce à un double jeu de roues dentées, dont l'un, actionné par la manivelle amovible, est mobile axialement pour permettre d'enclencher deux démultiplications différentes. Ces roues dentées sont logées dans un carter solidaire de l'une des béquilles, la seconde ne comportant qu'un renvoi d'angle entraîné par une barre rotative reliant les deux béquilles.

Pour pouvoir emporter la remorque et son chargement, il suffit de disposer d'un tracteur de type standard et d'une manivelle pour actionner les béquilles, ces dernières devant absolument être relevées pour permettre leur déplacement.

Depuis quelque temps, les vols de remorques se multiplient, et il n'existe à ce jour aucun moyen satisfaisant permettant de s'opposer à ces agissements, en dehors du gardiennage, qui entraîne des dépenses importantes et répétées. Le brevet GB-A-1 565 542, comportant les caractéristiques du préambule, décrit un dispositif destiné à être monté sur des béquilles existantes de semi-remorques constitué d'un simple verrou à clé agissant sur une tige s'engageant dans un pignon du mécanisme de manoeuvre des béquilles. Ce genre de système est généralement assez facile à forcer.

Le brevet EP-A-0 102 339 concerne un antivol pour voitures automobiles basé sur l'utilisations de béquilles articulées actionnées par un moteur électrique commandé par un interrupteur à clé. Tel qu'il est décrit, cet appareil n'est pas applicable à des semi-remorques de poids lourds.

Le dispositif selon la présente invention, comportant les caractéristiques de la revendication 1, propose une solution à ces problèmes. En effet, il permet pour un investissement raisonnable, d'empêcher le déplacement de la remorque par les personnes non munies d'une clef nécessaire à la manoeuvre des béquille.

Il est constitué par un verrou de sûreté intégré au mécanisme actionnant les béquilles, et agissant soit mécaniquement, en empêchant les roues dentées mobiles axialement d'engrener sur les pignons correspondants, ou en bloquant le renvoi d'angle par une pièce métallique s'insérant entre deux dents, ou encore en interdisant la rotation de la barre d'entraînement rotative reliant les deux béquilles, soit électriquement en coupant l'alimentation d'un moteur électrique alimenté par la batterie du tracteur et actionnant les béquilles, les verrouillages mécaniques et électriques pouvant être combinés.

Sur les dessins annexés, donnés à titre d'exemples non limitatifs de formes de réalisation de l'objet de l'invention:
la figure 1 représente une béquille de remorque vue de face,
la figure 2 est une vue latérale, suivant la flèche A de la figure 1,
la figure 3 est une coupe horizontale agrandie du carter, suivant les flèches B-B de la figure 1,
la figure 4 est une coupe verticale, à une échelle différente, suivant les flèches C-C de la figure 3 montrant une serrure agissant sur le renvoi d'angle,
la figure 5 représente la flasque externe du carter, vue de l'intérieur,
la figure 6 montre un détail agrandi de la serrure agissant sur le jeu de pignons mobiles,
et les figures 7 et 8 montrent respectivement de face et de côté une béquille équipée d'un moteur électrique de manoeuvre avec coupe circuit à clef.

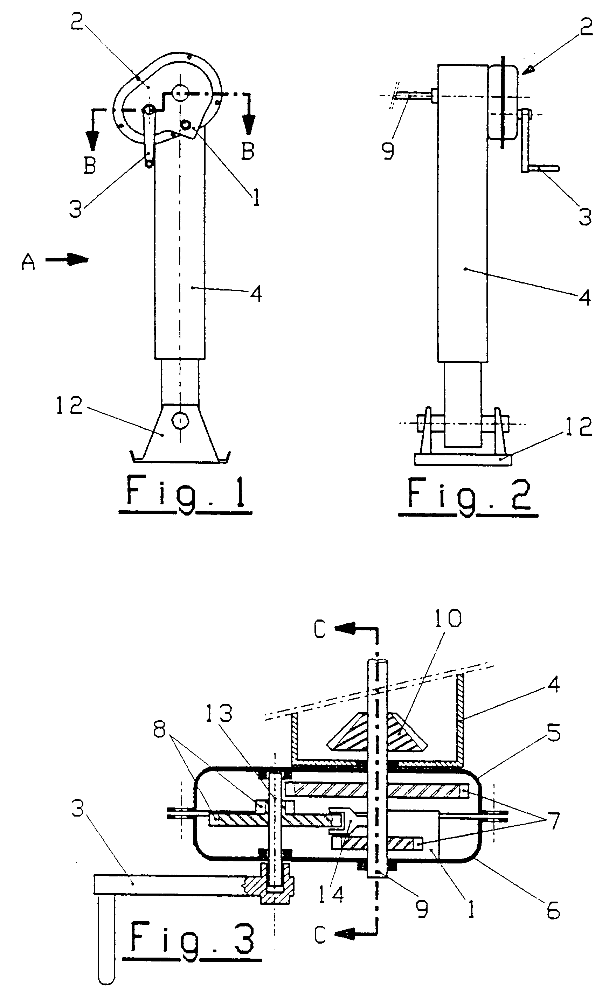

Le dispositif, figures 1, 2, 3, 5 et 6, est un antivol purement mécanique constitué dans sa version préférentielle d'une serrure 1 intégrée au carter 2 contenant les pignons permettant à la manivelle 3 d'actionner les béquilles 4.

Le carter 2 est formé de deux flasques normalement assemblées par boulonnage périphérique, une flasque interne 5 et une flasque externe 6. Ce carter abrite deux jeux de roues dentées, un jeu de deux roues menées 7 et un jeu de deux roues menantes 8. Les roues menées sont montées sur l'arbre commun 9 aux deux béquilles portant les pignons côniques 10 actionnant les tiges filetées 11 provoquant la montée ou la descente des semelles 12 des béquilles 4.

Les roues menantes 8 sont portées par un arbre mobile axialement 13 dont la position peut être modifiée de l'extérieur, ce qui permet d'enclencher deux démultiplications différentes ou une position point mort.

La serrure 1, montée de façon inamovible à l'intérieur de la flasque externe 6 du carter 2 et possède un pène 14 en forme de fourchette conçu de façon qu'il puisse immobiliser le jeu de roues dentées menantes 8 en position de point mort en se positionnant à cheval sur le bord de la plus grande roue dentée menante, ce qui interdit totalement la manoeuvre des béquilles. Les deux parties de l'extrémité du pène 14 sont avantageusement pourvues de butées 17 empêchant de forcer le dispositif de sécurité en tordant ledit pène, en tapant à coups de masse sur l'extrémité de l'arbre mobile 13. La longueur de ces butées est calculée de telle manière que leur extrémité frôle soit la paroi intérieure de la flasque externe 6 du carter, soit la plus grande des roues dentées menées 7

Afin de rendre le système inviolable, la fermeture du carter 2 est réalisée par soudage, rivetage, sertissage ou tout autre moyen équivalent.

La serrure 1 peut être aussi bien une serrure à clef, qu'une serrure à carte magnétique, à numérotation ou à code.

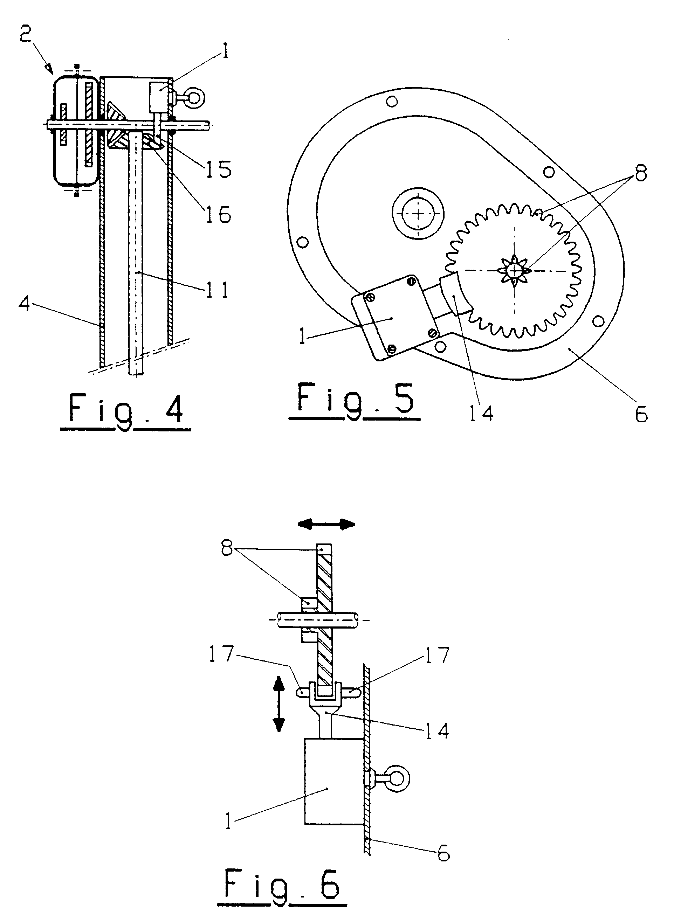

Dans une première variante d'exécution (figure 4), la serrure 1 est montée à la partie supérieure de la béquille 4 proprement dite, à l'intérieur du tube carré supérieur. Dans ce cas, le pène 15 est dessiné pour pouvoir pénétrer dans les dents du pignon conique mené 16 monté sur la tige filetée 11.

Dans une deuxième variante d'exécution (non représentée), le pène peut pénétrer dans un trou transversal prévu dans l'arbre commun 9 aux deux béquilles.

Dans une autre variante d'exécution (non représentée), le pène bloque le mécanisme en pénétrant dans le trou de l'arbre mobile axialement 13 prévu pour recevoir la goupille permettant de solidariser la manivelle 3 avec ledit arbre.

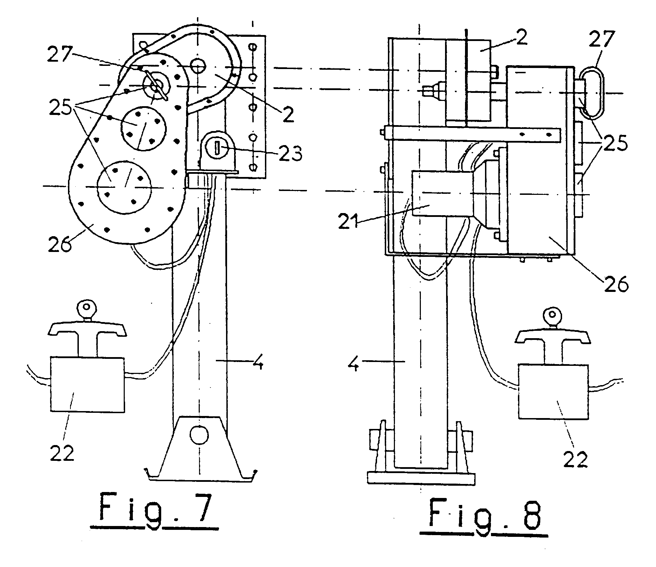

Le dispositif représenté sur les figures 7 et 8 comporte un moteur électrique 21, relié au tracteur par un coupe-circuit à clef 22 et mis en route à l'aide d'un interrupteur à clef 23 (par une clef identique), qui entraîne la montée ou la descente de la béquille 4. La liaison entre le moteur électrique 21 et les béquilles 4 est assurée à l'aide de pignons 25 insérés dans un boîtier 26 rempli de graisse et relié au système de pignons du carter 2. L'entraînement des pignons 25 peut être débrayé à l'aide d'une poignée 27 mettant le système au point mort.

La mise en route du moteur 21 ne peut être effectuée qu'après le déverrouillage du coupe-circuit à clef et après avoir actionné au moyen de l'interrupteur à clef 23 (avec la même clef) la manoeuvre de montéedescente de la béquille.

Toutefois, le moteur 21 peut être alimenté sans coupe-circuit à clef 22 ou mis en route sans interrupteur à clef 23 à l'aide d'un câble branché directement sur la batterie du tracteur (ce dispositif perdant alors ses fonctions de sécurité antivol).

Le dispositif selon l'invention est particulièrement destiné aux opérations de manoeuvre des remorques de poids lourds (citerne, frigorifique, plateau, etc.) et permet leur immobilisation par blocage des béquilles en toute sécurité.

Le positionnement des divers éléments constitutifs donne à l'objet de l'invention un maximum d'effets utiles qui n'avaient pas été, à ce jour, obtenus par des dispositifs similaires.

## Revendications

1. Dispositif de sécurite antivol pour remorques de poids lourds articulés du type semi-remorque constitués d'un tracteur routier et d'une remorque pouvant être désolidarisés interdisant la manoeuvre des béquilles (4) de stationnement, ces béquilles étant du type constitué de deux tubes de section carrée coulissant l'un dans l'autre, le tube inférieur portant une semelle (12) articulée reposant sur le sol,
caractérisé en ce que le tube inférieur est actionné par une vis interne (11) entraînée par l'intermédiaire d'un renvoi d'angle grâce à un ensemble débrayable de roues dentées (7, 8) et/ou de pignons (25) logés dans un carter ou boîtier (2, 26) solidaire de l'une des béquilles, et qu'une serrure de sûreté à clef (1, 23) agit sur l'ensemble débrayable pour le verrouiller en position débrayée ou sur un interrupteur en cas d'une source d'énergie motrice constituée par un moteur électrique.

2. Dispositif selon la revendication 1, se caractérisant par le fait que la montée ou la descente des béquilles (4) est effectuée grâce à un moteur électrique (21), relié au tracteur par un coupe-circuit à clef (22) permettant d'interdire son utilisation et commandé par un interrupteur également à clef (23), la liaison entre le moteur électrique (21) et les béquilles (4) étant assurée à l'aide de pignons (25) protégés par un boîtier (26) rempli de graisse, l'entraînement des pignons (25) pouvant être débrayés à l'aide d'une manette (27) mettant le système au point mort.

3. Dispositif selon la revendication 2 caractérisé en ce que l'entraînement des béquilles (4) par le moteur électrique (21) est obtenu par adaptation directe dudit moteur sur le carter (2) de la béquille.

4. Dispositif selon la revendication 2 caractérisé en ce que le moteur électrique (21) entraîne les béquilles (4) par l'intermédiaire d'un système hydraulique.

5. Dispositif selon la revendication 1, se caractérisant par le fait que le dispositif de sécurite antivol est constitué par une serrure (1) de sûreté intégrée au mécanisme actionnant les béquilles, et dont le pène (14, 15) agit sur un double jeu de roues dentées (7, 8) logées dans un carter (2) solidaire de l'une des béquilles, dont l'un est mobile axialement pour permettre d'enclencher deux démultiplications différentes ou de sélectionner une position débrayée empêchant les roues dentées mobiles axialement d'engrener sur les pignons correspondants.

6. Dispositif selon la revendication 5, se caractérisant par le fait que la serrure (1) est montée de façon inamovible à l'intérieur de la flasque externe (6) du carter (2) et possède un pène (14) en forme de fourchette conçu de façon qu'il puisse immobiliser en position débrayée le jeu de roues dentées menantes (8) porté par l'arbre mobile axialement (13) en se positionnant à cheval sur le bord de la plus grande roue dentée menante.

7. Dispositif selon les revendication 5 et 6, se caractérisant par le fait que les deux parties de l'extrémité du pène (14) sont pourvues de butées (17) empêchant de forcer le dispositif de sécurité en tordant ledit pène, la longueur de ces butées étant calculée de telle manière que leur extrémité frôle soit la paroi intérieure de la flasque externe (6) du carter, soit la plus grande des roues dentées menées (7).

8. Dispositif selon les revendications 5 à 7, se caractérisant par le fait que la fermeture du carter (2) est rendue inviolable par soudage, rivetage, sertissage ou tout autre moyen équivalent.

## Claims

1. Anti-theft device for use on articulated road trucks consisting of separable traction unit and trailer prohibiting the movement of parking struts (4), these struts comprising two square section tubes sliding one inside the other, the lower tube with articulated base plate (12) standing on the ground,
characterised in that the lower tube is operated by an inner screw (11) driven by a bevel gear using a disengageable system of two gear wheels (7, 8) and/or pinions (25) housed in a gear casing or box (2, 26) forming an integral part of one of the struts, and a safety lock with key (1, 23) operating on the disengageable assembly in order to lock it in the disengaged position, or on a switch when a power source consisting of an electric motor is used to drive the device.

2. Device as per claim 1, characterised in that the struts (4) are raised or lowered by the action of an electric motor (21), connected to the traction unit by a key-operated circuit breaker (22) for prohibiting its use and operated by a key-operated switch (23), the coupling between the electric motor (21) and the struts (4) being provided by pinions (25) protected by a box (26) filled with lubricant, drive to the pinions (25) may be disengaged using a handle (27) which sets the system to neutral.

3. Device as per claim 2 characterised in that drive by the electric motor (21) to the struts (4) is obtained by directly adapting the said motor onto the strut gear casing (2).

4. Device as per claim 2 characterised in that the electric motor (21) drives the strut (4) through the action of a hydraulic system.

5. Device as per claim 1 characterised in that the anti-theft device consists of a safety lock (1) integrated in the mechanism for operating the struts, the bolt of which (14, 15) operates on a dual set of gear wheels (7, 8) housed in a gear casing (2) integrally incorporated in one of the struts, one being axially mobile to enable two different gear reductions, or to select a disengaged position preventing the axially mobile gear wheels from engaging the corresponding pinions.

6. Device as per claim 5 characterised in that the lock (1) is fitted immovably inside the outer flange (6) of the gear box (2) and has a bolt (14) in the form of a fork designed so that it can fix the driven gear wheel set (8) carried by the axially mobile shaft (13) in a disengaged position straddling the edge of the largest driving gear wheel.

7. Device as per claims 5 and 6 characterised in that the two parts of the end of the bolt (14) are provided with stops (17) preventing the safety device from being forced by twisting the said bolt, the length of these stops being designed so that their end brushes against either the inner wall of the outer flange (6) of the housing or the largest of the driven gear wheels (7)

8. Device as per claims 5 to 7 characterised in that the gear box (2) is closed by welding, riveting, swaging or any other equivalent method.

## Patentansprüche

1. Vorrichtung zur Diebstahlsicherung für gelenkige LKW-Anhänger des Typs Sattelzug, bestehend aus einer Sattelzugmaschine und einem Anhänger, der abgetrennt werden kann, mit Sperre der Bewegung: der Stützfüße (4), welche Stützfüße aus zwei ineinander gleitenden Rohren mit quadratischem Querschnitt bestehen und das innere Rohr mit einer beweglichen auf dem Boden aufliegenden Fußplatte (12) versehen ist, dadurch gekennzeichnet, daß das innere Rohr durch eine interne Schnecke (11) betätigt wird, angetrieben durch ein Umlenkgetriebe mittels einer auskuppelbaren Einheit von Zahnrädern (7, 8) und/oder Ritzeln (25), gelagert in einem mit einem der Stützfüße kraftschlüssig verbundenen Gehäuse (2, 26), und ein abschließbares Sicherheitsschloß (1, 23), das auf die auskuppelbare Einheit in ausgekuppelter Position oder auf einen Schalter im Fall einer durch einen Elektromotor gebildeten Antriebsenergiequelle wirkt.

2. Vorrichtung gemäß Anspruch 1, dadurch gekennzeichnet, daß das Einfahren und Ausfahren der Stützfüße (4) mittels eines Elektromotors (21) erfolgt, der über eine Schlüsselsicherung (22) an den Sattelzug angeschlossen ist und ermöglicht, seine Benutzung zu sperren und durch einen ebenfalls abschließbaren Schalter (23) gesteuert wird, wobei die Verbindung zwischen dem Elektromotor (21) und den Stützfüßen (4) mit Hilfe von in einem mit Fett gefüllten Gehäuse (26) gelagerten Ritzel (25) gewährleistet ist und der Antrieb der Ritzel (25) mittels eines Bedienungsgriffs (27) ausgekuppelt werden kann, wodurch das System auf Leerlauf geschaltet wird.

3. Vorrichtung gemäß Anspruch 2, dadurch gekennzeichnet, daß der Antrieb der Stützfüße (4) durch den Elektromotor (21) durch direktes Anbringen des besagten Motors auf dem Gehäuse (2) des Stützfußes erreicht wird.

4. Vorrichtung gemäß Anspruch 2, dadurch gekennzeichnet, daß der Elektromotor (21) die Stützfüße (4) mittels eines Hydrauliksystems antreibt.

5. Vorrichtung gemäß Anspruch 1, dadurch gekennzeichnet, daß die Diebstahlsicherung aus einem Sicherheitsschloß (1) besteht, welches in den die Stützfüße betätigenden Mechanismus integriert ist und dessen Riegel (14, 15) auf einen Doppelsatz von Zahnrädern (7, 8) eingreift, die in einem kraftschlüssig mit einem der Stützfüße verbundenen Gehäuse (7) gelagert sind, wovon einer in axialer Richtung beweglich ist, um das Einrasten von zwei verschiedenen Untersetzungsgetrieben oder die Wahl einer entkuppelten Position zu ermöglichen, welche die Kupplung der axial beweglichen Zahnräder mit den entsprechenden Ritzeln verhindert.

6. Vorrichtung gemäß Anspruch 5, dadurch gekennzeichnet, daß das Schloß (1) auf unabnehmbare Weise innerhalb dem äußeren Deckel (6) des Gehäuses (2) montiert ist und einen Riegel (14) in Form einer Gabel besitzt, der so ausgelegt ist, daß er in ausgekuppelter Position den Satz der treibenden Zahnräder (8) festsetzen kann, welcher von der axial beweglichen Welle (13) getragen wird und sich auf den Rand des großen treibenden Zahnrads positioniert.

7. Vorrichtung gemäß den Ansprüchen 5 und 6, dadurch gekennzeichnet, daß die beiden Endteile des Riegels (14) mit Anschlägen (17) versehen sind, die verhindern, die Sicherheitsvorrichtung durch Verbiegen des besagten Riegels aufzubrechen, wobei die Länge dieser Anschläge so berechnet ist, daß ihre Extremität entweder die Innenwand des äußeren Deckels (6) oder das größere der angetriebenen Zahnräder (7) streift.

8. Vorrichtung gemäß den Ansprüchen 5 bis 7, dadurch gekennzeichnet, daß der Verschluß des Gehäuses (2) durch Verschweißen, Vernieten, Bördeln oder ein ähnliches Verfahren unverletzbar gemacht ist.
